# EUROPEAN PATENT SPECIFICATION

(11) **EP 3 722 911 B1**
(45) Date of publication and mention of the grant of the patent: **20.12.2023**
(21) Application number: 20165720.2
(22) Date of filing: 25.03.2020
(51) Int. Cl.: G05D 1/02, G01C 21/20, B63H 25/00

(54) **A SYSTEM AND METHOD OF PLANNING A PATH FOR AN AUTONOMOUS VESSEL**
SYSTEM UND VERFAHREN ZUR PLANUNG EINES WEGES FÜR EIN AUTONOMES SCHIFF
SYSTÈME ET PROCÉDÉ DE PLANIFICATION D'UN TRAJET POUR UN NAVIRE AUTONOME

(30) Priority: 12.04.2019 GB 201905236
(43) Date of publication of application: 14.10.2020
(73) Proprietor: Thales Holdings UK Plc, Reading, Berkshire RG2 6GF (GB)
(72) Inventor: RIMMER, Ed, Reading, Berkshire RG2 6GF (GB)
(74) Representative: Marks & Clerk LLP

(56) References cited:
- EP-A1- 2 498 056
- JP-A- H07 242 199
- JP-A- 2006 315 474
- US-A1- 2008 255 757
- YU-HSIEN LIN ET AL: "The optimization of ship weather-routing algorithm based on the composite influence of multi-dynamic elements", APPLIED OCEAN RESEARCH, vol. 43, 1 October 2013 (2013-10-01), pages 184-194, XP055573980, AMSTERDAM, NL ISSN: 0141-1187, DOI: 10.1016/j.apor.2013.07.010

## Description

### Field of invention

The invention relates to a system and method for planning a path for an autonomous marine vessel. In particular, though not exclusively, the system and method may account for drift conditions and the effect this may have on the navigable path of the vessel. The invention may be advantageously applied to vessels with tows.

### Background

The field of autonomous marine vessel control has been of increased interest over recent years with prior art being developed on many fronts. One area of active research is the planning of vessel in waters where there may be static or moving obstacles.

"Motion Planning Algorithms for Marine Vehicles"; K. Hvamb, MA thesis, Norwegian University of Science and Technology, July 2015, provides an overview of some motion planning techniques for marine vessels in areas with obstacles. The techniques reviewed include Voronoi diagrams, probabilistic roadmapping and rapidly exploring random trees, RRTs. RRTs are discussed in detail in combination with Dubin's curves and clothoids to transition between straight and curved sections of the route. Once a route has been planned, the vessel tracks the planned route in real time to account for ocean currents and drift.

The present invention seeks to provide an improved method and system for planning a path for an autonomous marine vessel.

In the article titled "The optimization of ship weather-routing algorithm based on the composite influence of multi-dynamic elements" by Yu-Hsien Lin, Ming-Chung Fang and Ronald W. Yeung, from Applied Ocean research in Volume 43 (October 2013), it was disclosed that a ship weather-routing algorithm based on the composite influence of multi-dynamic elements for determining the optimized ship routes. The three-dimensional modified isochrone (3DMI) method utilizing the recursive forward technique and floating grid system for the ship tracks is adopted. The great circle sailing (GCR) is considered as the reference route in the earth coordinate system. Illustrative optimized ship routes on the North Pacific Ocean have been determined and presented based on the realistic constraints, such as the presence of land boundaries, non-navigable sea, seaway influences, roll response as well as ship speed loss. The proposed calculation method is effective for optimizing results by adjusting the weighting factors in the objective functions.

US2008255757A1 discloses a calculation of a route for a vessel to travel from a start point to an end point. A start point and an end point for the vessel are identified. A forecast of wave conditions during a period of time is obtained. A model of the vessel is obtained, wherein the model includes parameters used to calculate a response of the vessel to the wave conditions. A route is generated from the start point to the end point for the vessel to travel on using the model of the vessel and the forecast of the wave conditions, wherein the route avoids conditions that may cause a treacherous environment and meets a set of goals.

JP2006315474A discloses an automatic navigation assistance system for ships using a command radius computing portion that calculates tidal current speed/direction information based on scheduled ship course data input by a scheduled ship course data storage part, ground speed/direction information obtained by a GPS navigation device, a log direction obtained by a gyroscope, and log speed (log speed/direction information) obtained by a ship speed measuring instrument. An automatic pilot device calculates steering angle based on the tidal current speed/direction information input by the command radius computing portion, and the obtained log speed/direction information to output the calculated steering angle to a steering device. With this constitution, the steering device turns the shipping to a predetermined direction based on the input steering angle, thus accurately sailing the ship along the scheduled ship course.

### Summary

The present invention provides a method and apparatus according to the appended claims.

Accounting for the drift conditions during path planning can provide an improved path for the vessel to navigate. This may be particularly advantageous for a vessel with a tow.

The modified primary path may comprise at least one turn having a first turn radius. The revised primary path may comprise the at least one turn with a second turn radius. The second turn radius may be greater than the first turn radius.

The motion constraint may define the first turn radius.

The method may further comprise: determining a plurality of points along the primary path. The plurality of points may be extrapolated in accordance with the drift conditions. The method may comprise using the extrapolated positions of the plurality of points to determine whether the motion constraints are breached.

The primary path may include a start waypoint and an end waypoint. The extrapolated positions may provide the position that the points would migrate to under the influence of the drift conditions in the time it would take for the vessel to arrive at the end waypoint with a constant speed through the water. Extrapolating the position of the plurality of points may include determining a time it takes for the vessel to travel between a first point and a second point and determining the drift of the second point under the drift conditions during the time.

The time it takes for the vessel to travel between the first point and second point may be determined using a constant through the water speed of the vessel and the drift conditions.

The motion constraint may comprise a maximum rate of turn through the water. Determining whether the modified primary path is navigable within predetermined motion constraints of the vessel may comprise determining whether the maximum rate of turn is breached.

The method may further comprise determining a plurality of vertices along the modified primary path, determining an angle of the vertices, wherein determining whether the modified primary path is navigable comprises assessing whether the angle of the vertices is navigable by the vessel.

Determining the modified path may comprise applying the drift conditions to the vessel.

The vessel may comprise a tow.

A minimum turn diameter of the tow may be determined from the paid out cable length of the tow and speed through the water.

The primary or modified path may comprise one or more of an arcuate manoeuvre, a parallel manoeuvre and a Boutakoff manoeuvre.

Receiving the primary path may comprise: receiving a start position and pose and an end position and pose and determining a path segment which starts at the start position and pose and terminates at the end position and pose.

Determining the path segment may comprise fitting a Dubin's curve from the start position and pose to the end position and pose.

Determining the path segment may comprise determining a rapidly exploring random tree from the start position to the end position and selecting a preferred path from the rapidly exploring random tree.

The method may further comprise fitting a Dubin's curve over the preferred path.

The path may form part of a route for the vessel, the route including a plurality of paths in which the paths are separated by waypoints, wherein each path is planned and executed in turn prior to next path being planned.

Obtaining the primary path of travel for the vessel may comprise receiving or determining the primary path of travel. The primary path of travel may be obtained from within the path planner or elsewhere. The path planner may determine the primary path.

Obtaining drift conditions for the vessel travelling along the primary path may comprise determining the drift conditions. The drift conditions may be determined from data captured local to the vessel. The drift data may be obtained from sensors on-board the vessel. The sensors may comprise one or more Doppler sensor.

The present disclosure also provides a vessel management system comprising: at least one processor; at least one memory comprising computer readable instructions; the at least one processor being configured to read the computer readable instructions to cause performance of the methods described herein.

The present disclosure may also provide a computer program that, when read by a computer, causes performance of the methods described herein.

Further, the present disclosure may also provide a non-transitory computer readable storage medium comprising computer readable instructions that, when read by a computer, cause performance of the method described herein.

The vessel management system may comprise a path planner module. The path planner module may comprise a point sequencer module, a core planning module and a plan execution module. The path planner module may be connected to a mission database.

The mission database may store one or more waypoints. The waypoints may be start, end or intermediate waypoints. The mission database may store a pose for each of the waypoints. The path planner may be configured to receive the waypoints from the mission database.

The point sequencer may be connected to the mission database and take a series of required positions and poses to be achieved together with data about the environment. The data may include one or more of: the drift, set, vessel position and heading. The data may be obtained in real time. The point sequencer may pass the positions and poses and data to the core planning module. The core planning module may determine a plan for each required position and pose.

The core planning module may carry out the described method steps. The core planning module may determine the outputs the navigational plan which has been adjusted to account for drift conditions. The core planning module may provide the plan to the plan execution module.

The plan execution module may receive the plan from the core planning module. The plan may comprise a series of waypoints to be achieved to provide a queue. The waypoints may be drip-fed into the vessel as the each waypoint is achieved. The plan execution module may monitor the vessel position to determine when a waypoint has been achieved.

The skilled person will appreciate that except where mutually exclusive, a feature described in relation to any one of the aspects, examples or embodiments described herein may be applied to any other aspect, example, embodiment or feature. Further, the description of any aspect, example or feature may form part of or the entirety of an embodiment of the invention as defined by the claims. Any of the examples described herein may be an example which embodies the invention defined by the claims and thus an embodiment of the invention.

### Brief Overview of Figures

The invention will now be described, by way of example only, with reference to the accompanying drawings, in which:
Figure 1 shows a schematic representation of a marine vessel route.
Figure 2 provides a flow diagram indicating some steps of the method.
Figure 3 shows a schematic representation of an example primary path and a modified primary path.
Figure 4 shows a flow diagram for an example method of planning a route for a vessel.
Figure 5 shows a schematic representation of a revised primary path and a modified revised primary path.
Figures 6a-6f show steps of a randomly exploring tree algorithm.
Figure 7 shows a plurality of paths between a start position and end position using Dubin's curves.
Figure 8 shows a system which may be used to implement the methods described herein.
Figure 9 shows a schematic representation of a path planner.

### Detailed description

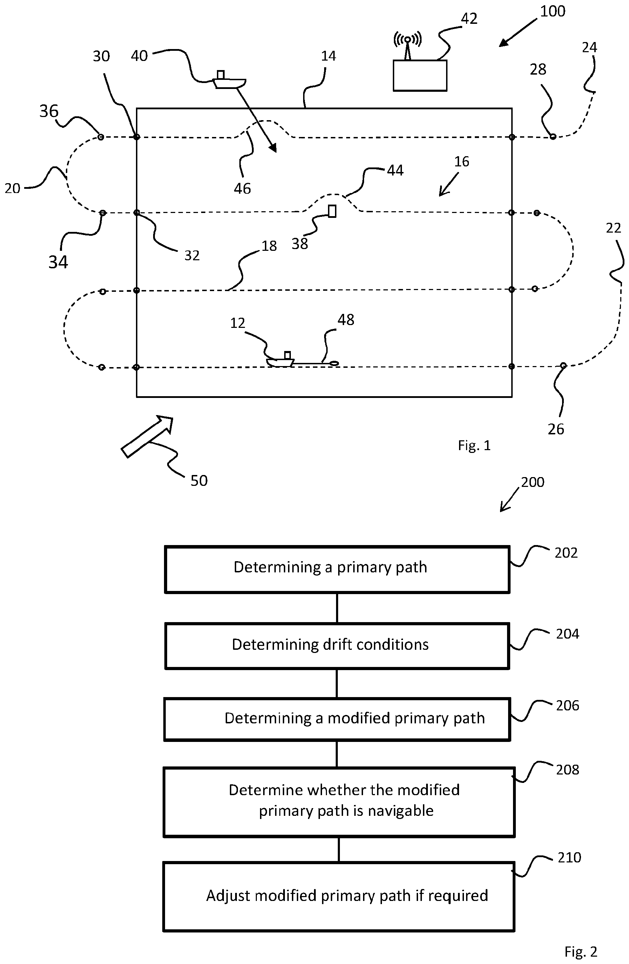

Figure 1 shows a schematic representation of a marine environment 100 in which a vessel 12 traverses an area of water 14. The path 16 of the vessel 12 may include a plurality of straight portions 18 and turns 20 in any arrangement or pattern required of the vessel 12. In the example shown in Figure 1, the path 16 comprises a plurality of parallel straight tracks connected end on end by a plurality of curved portions 20. The curved portions may provide 180 degree turns and have a constant or different turning radius. The path may include a lead-in portion 22 from which the vessel approaches from a launch, and a lead-out portion 24 from which the vessel leaves the path and returns to the launch.

The path 16 may also include a plurality of waypoints which are distributed along the path 16 segmenting the route. Thus, the path may include a start way point 26 and an end way point 28 which mark the start of a planned route, and may include waypoints which demarcate the start of a straight track 18 or turn 20. Alternatively, the waypoints marking the end of a particular section such as a straight track or turn may be separated by a short transition phase. Thus, in Figure 1 there is shown a start track waypoint 30 and end track waypoint 32 for each of the straight tracks 18, and a lead-in waypoint 34 and exit turn waypoint 36 for each of the turns 20.

The path that an autonomous vessel 12 travels along may include one or more obstacles. The obstacles may be static 38, or may be dynamic, i.e. moving, such as another vessel 40.

The vessel 12 may be any vessel as known in the art but does include an element of autonomy. The vessel 12 may be fully autonomous so as to sense, plan and execute its route in real time or partially autonomous in that a human operator may carry out certain predetermined tasks, or intervene when the automated system is deemed to be inadequate for a particular scenario. The human operator may be located on-board the vessel or in a remote ground station 42.

Thus, in one example, the vessel 12 may include a control system which determines a path along which to navigate the vessel 12, navigate the vessel along the path, sense an obstacle 38, determine and navigate a new path 44 which accounts for the obstacle 38. In another example, the vessel 12 detect a moving obstacle, such as vessel 40, which is on a collision course with the vessel 12. In such a scenario, a human operator in the ground station 42, may take control of the vessel 12 and determine a safe alternative path in accordance with COLREGs protocols. It will be appreciated that human intervention may be restricted to occasions when an error occurs.

As such, the vessel 12 may include one or more systems which are configured to control the vessel without direct human control for at least a portion of a path. The control system will typically include a computer program which is configured to receive or determine instructions which relate to the route or path that the vessel 12 is to take and execute that path. The system may also include sensing equipment which can sense the surrounding environment for obstacles. Such systems may include sonar, radar and/or LIDAR for example.

In addition to the static and dynamic obstacles, 38 and 40, the over-ground path which the vessel path 16 is planned on may differ from the path through the water actually navigated due to the prevailing drift conditions in the water. The drift conditions may comprise, ocean swell, currents or tides, or local weather which may create wind and waves that move the vessel 12 in relation to the ground coordinates used to identify the position of and navigate the vessel 12. In the example, of Figure 1, the drift is indicated by arrow 50.

The effect of the drift conditions 50 may be accounted for by tracking the vessel position against the expected vessel position and adjusting the position accordingly. Once a difference is established, the vessel 12 may be controlled to account for the difference and any drift conditions 50.

Accounting for the drifts conditions 50 in a planning phase may lead to an improved course which can be more readily tracked by the autonomous systems of the vessel 12 during execution. Thus, the accuracy of the vessel 12 position in relation to the path can be improved. This can result in a reduced time and distance spent away from the path 16. These factors can be important in many scenarios.

In the example shown in Figure 1, the vessel 12 is tasked with surveying an area of water 14. This task may relate to surveying or mapping a portion of sea bed or searching for something, for example. As such, the vessel 12 may comprise a tow 48 which may comprise, for example, sensing equipment required for surveying the area 14 such as a sonar module or the like. The tow 48 may capture information and send it to the vessel 12 or some other receiving entity. In such a scenario, it may be advantageous for the vessel 12 to track the path 16 accurately and spend a minimum amount of time off the predetermined path 16.

Accounting for the drift conditions 50 may also allow the vessel path 14 to be shortened. As can be seen in Figure 1 and described above, there may be a transition portion between a turn 20 and the start waypoint 30 of a straight track 18 to allow the vessel 12 to correct the heading for the next approaching straight track 18. If the vessel 12 is able to navigate the turn 20 more accurately, then the transition may be reduced providing a reduction in the path length and ultimately a time and energy efficiency improvement.

The invention provides a method and system for providing an improved autonomous vessel 12 path. The improved method and system may take account of the drift conditions during the planning phase. Thus, as shown in Figure 2, the method may provide a path planning method for an autonomous marine vessel 200, comprising: receiving a primary path of travel for the vessel 202; receiving drift conditions for the vessel travelling along the primary path 204; determining a modified primary path 206 which may represent the vessel path through the water when the vessel is travelling along the primary path under the influence of the drift conditions; determining whether the modified primary path is navigable 208 which may comprise determining whether the modified primary path is within predetermined motion constraints of the vessel; and, revising the modified primary path if required, for example if the motion constraints of the vessel are breached.

It will be appreciated that, depending on the scope of tasks the system is responsible for, the method may include determining the primary path and/or determining the drift conditions from data received by the system, rather than receiving these from another entity.

If the modified path is determined to be satisfactory, for example, if the motion constraints of the vessel 12 are within a threshold, the primary path may be provided as the path for the vessel. The path may be provided to or implemented by a vessel control system to execute the path or specific waypoints or waypoint goals along the path.

In some instances, the path planning method may determine that the drift conditions 50 determine that the modified primary path breach one or more motion constraints of the vessel. In such a scenario, the method may further comprise: determining a revised primary path. The revised primary path may be assessed to determine whether the revised primary path is navigable within predetermined motion constraints of the vessel. If so, the revised primary path can be provided as the path for the vessel to travel along.

Determining the primary path of travel may be determined from a predetermined task or mission. The task or mission may include a requirement for the vessel in relation to an area or two or more waypoints. For example, the task may relate to searching an area, as per the example shown in Figure 1, or maybe to navigate from a start position to an end position. The start and end positions may be provided by waypoints. The task may be specified in more detail and comprise an over-ground track which the vessel must undertake. Thus, as shown in Figure 1, the vessel 12 may be required to carry out a survey on an area or water and provided with a primary path 14 which represents an over-ground track.

Depending on the level of information provided with the task, the primary path may be determined as part of the method, or simply received. Thus, the primary path may be determined by a separate entity which is remote from the path planning system and may be provided as a number of waypoints or the like. Hence, as shown in Figure 1, the vessel's 12 basic mission may be to traverse a survey area in a lawn-mower pattern based on a set of pre-planned survey tracks. The tracks may be identified with the various waypoints indicated by reference numerals 22 to 36.

As such, the primary path may be determined in the absence of certain information which may affect the actual path the vessel 12 will need to undertake. The vessel 12 may need to perform other manoeuvres that cannot be pre-planned such as turning at the end of a track taking into account the drift conditions or manoeuvres related to a payload launch and recovery taking into account the direction of the sea swell. The payload may be, for example, the tow 48 indicated in Figure 1.

In the instance where only a start position and end position is provided as the primary path, or a start position and pose and an end position and pose, the path planner may determine a series of intermediate waypoints for the vessel to perform in order to complete the manoeuvre taking into account the motion constraints, such as the vessel and payload navigational constraints, prevailing environmental conditions and relevant static obstacles.

In addition to the above, the method may be carried out within an existing route or task in which the vessel is traversing an existing path which has been previously provided by the path planner. For example, where an intervention by a human operator has been carried out during the execution of the path to avoid a dynamic or previously undetected static object. In such a scenario, the path planner may be provided with a new start position and pose, i.e. that of the vessel at the end of the intervening manoeuvre, and determine a way point and pose on the previously traversed path and the required path to return the vessel back to the originally planned path.

The primary path may be a segment of a longer path or route. In one example, the primary path is a turn within a longer path. The method may be executed in relation to the turn before being executed for a subsequent segment of the route. Hence, for example, the path planner may provide the path for a straight section of a route which is executed to an end or track waypoint, prior to planning a turn in which the over-ground path of the turn is taken to be the primary path.

Thus, the path planner may be provided with or determine one or more of the following: a series of start and end positions and poses from other components vessel management systems or remote entities before or during a mission; a turn at the end of a survey track in which only the pre-planned end of track start turn waypoint and the start of next track lead-in waypoint may be provided; a manoeuvres related to a payload launch and/or recovery in which the positions and poses to be achieved may be determined during the mission and may depend on the sensed prevailing swell direction; achieving start and end positions and poses defined by the vessel position when the operator re-engages autonomous control during a mission after a period of direct operator control; start and end positions and poses defined by the vessel position after a collision avoidance manoeuvre where the vessel determines a path back to its activity prior to that manoeuvre.

The path planner may be provided with real-time or near real-time data. The data may be sensed data relating to vessel position, heading, course, speed through the water, and ocean drift and swell. The data may also include characteristics of a deployed payload such as the paid out cable length of a tow cable or the like, when used.

The path planner may work in conjunction with a set of autonomous controls and systems that are responsible for achieving the individual waypoints output by the planner. These may include various motion control systems including drives and positional thrusters. It will be appreciated that there may be multiple layers of software between the path planner output and the actual physical hardware that controls the motion of the vessel through the water.

The primary path received by the planner may comprise a start and end position, optionally with start and end poses. In this case the planner may determine the path over ground and associated path through the water that respects the navigation constraints for the given drift. Alternatively, the path planner may comprise an over-ground path from a start position to an end position that has a turn radius determined by the navigation constraints of the vessel. In this case the planner may determine the appropriate over ground path starting from the received path and the through the water path that respects the navigation constraints for the given drift. The primary path may result in smooth series of turns that avoids static obstacles and may be constrained to stay within a defined operational boundary such as area 14. The primary path planning function may allow, for example, the vessel to turn at the end of one track and onto the next performing a Boutakoff, parallel or circular turn as the geometry of the turn requires.

The planning of the primary path may include the implementation of one or more algorithms for determining the most suitable path. In one example, the primary path may be determined in two phases, the first phase may include determining an initial primary path from a start position to an end position avoiding known obstacles using, for example, an RRT, and a second phase in which a series of Dubin's curves are applied to the initial primary path. An example of a Dubin's curve method and RRT method combined with an Dubin's curve fitting method is provided below.

The path planner may receive the drift conditions or determine them using data provided by the vessel systems using known techniques. The drift conditions may, for example, be determined from on-board sensors such as an acoustic Doppler current profiler which detects Doppler shift in floating bodies such as plankton at different depths, as well known in the art.

The modified primary path may represent the through water path. The primary path may be an over-ground path in which effects of the drift conditions are not taken into account. Thus, the modified primary path may relate to the primary path in which the influence of the drift conditions have been accounted for. The modified primary path may be also be referred to as the drifted primary path. The path planner may determine a modified primary path using the drift conditions.

Typically, a vessel 12 will be provided with propulsion drive to move the vessel fore and aft. At slower speeds, the vessel 12 may include positional thrusters (such as bow thrusters) to provide a near zero turning circle. However, in many instances the path planner is configured to determine a route for a vessel 12 at a cruising speed and, as such, may be considered to be non-holonomic. This is particularly so when the vessel 12 is towing, as described above. In some examples, the minimum vessel speed may be considered to be 1 knot. Generally, the vessel speeds of interest may be between 1 knot and 20 knots. When taken to be a non-holonomic, the vessel 12 may be considered to only be able to move forwards with a minimum radius of turn, R. The minimum turn radius may be between 10 metres and 600 metres, more preferably between 20 metres and 400 metres.

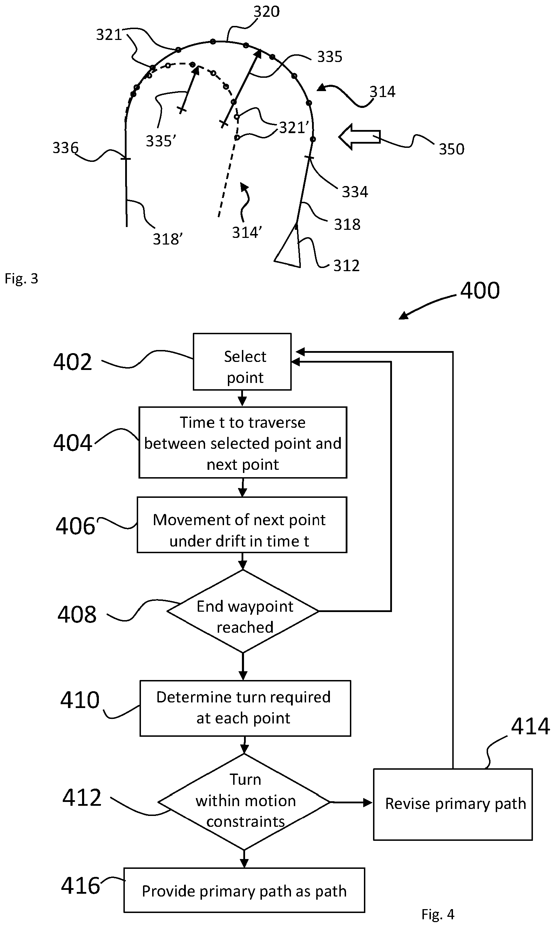

Figure 3 shows an example of a primary path 314 which extends from a first waypoint 334 on the turn to a turn exit waypoint 336. The primary path 314 may be a segment of a longer mission or task path (such as that shown in Figure 1). The primary path 314 may include a straight section 318, which transitions to a turn 320 at the first turn waypoint 334 which may transition into a second straight section 318' at the turn exit waypoint 336. The turn may have a radius 335 which may be provided by the minimum turn radius of the vessel 312. Thus, in non-drift conditions where the over-ground primary path is the same as the through-water primary path, the vessel will be approach the turn 320 from the first straight 318 and navigate the turn which follows the minimum turn radius 335 before exiting. In the case where drift conditions 350 exist, the primary path 314 will be modified by drift conditions 350 such that the over-ground primary path is different to the through-water primary path.

The effect of the drift conditions 350 is shown schematically in Figure 3 by path 314' and provides the through-water path which is shown as being compressed across the width of the page. The alteration of the primary path 314 in this way, may result in one or motion constraints of the vessel 312 being breached. In particular, the radius of turn through the water 335' may be smaller than the minimum radius of turn through the water for the vessel 312 meaning that the path cannot be followed without slowing the vessel 312 to allow a corrective turn to be made. However, slowing the vessel 312 sufficiently may not be straightforward or even possible in some instances, particularly when towing a payload.

Thus, the path planner may be configured to determine a modified primary path for which the radius of the turn through the water is greater than a minimum turn radius. The minimum turn radius may be determined from the characteristics of the vessel and speed at which it travels, for example. In the case of a vessel with a tow, the radius of turn (with respect to water) may depend on the paid out length of the tow cable and the speed through the water, for example.

In one example, the points 321 of the turn 320 for the primary path 314, or a segment thereof, may be calculated using the predetermined radius of the turn for the vessel characteristics and/or by the start and end positions 334 and 336. Next the points 321 may be extrapolated to the positions 321' they would reach by the time the vessel 312 reaches the end of the turn 320 if the points were to drift due to the drift conditions 350. This modified primary path 314' may be referred to as the modified or drifted path. To help conceptualise this, it may be envisaged that markers are provided at each point at time to which corresponds to the vessel 312 reaching the lead-in waypoint 334. Under non-drift conditions, the time the vessel would reach the exit turn waypoint 336 would be time t₁. The effect of the drift on the path 314 may be estimated to be the amount the markers would move in the time interval between to and t₁. In other words, the positions the points 321 would move due to ocean drift by the time the vessel 312 has completed the turn are the points that are calculated at this stage. The drift of the points 321 may be determined on the basis of the time it takes the vessel to travel between adjacent points.

Figure 4 shows an example of determining the drift 400 on a point by point basis. Thus, for each point 321, the path planner may determine the time it takes to travel between adjacent points, i.e. from a first point to the next point along the primary path, update the positions of all points in the drifted path by determining the amount of drift which would occur in the travel time. Doing this for each of the points provides the drifted path. So, as shown in Figure 4, the path planner may select a first point 402 which may be the lead-in waypoint 334 or the first point 321 along the turn 320. A time t is then calculated for the vessel to traverse from the selected point to the next point along the path 404 before determining the movement of the or selected point due to the drift conditions for the duration of the time t 406. It will be appreciated that the drift conditions may be represented as a speed, e.g. metres per second, and direction at which the drift conditions move the point. This process may be repeated until the end waypoint is reached 408. Once all the points have been considered and modified as per the above, the modified path has been determined.

Once the modified path has been determined, the path planner may determine the turn required at each of the points in order to traverse the modified path passing through each of the modified point positions 410. If the required turn is greater that than the minimum turn radius 412, or maximum rate of turn of the vessel due to the navigational constraints of the vessel, then the motion constraints of the vessel may be deemed to be breached. If this is the case, the primary path may be revised and the process repeated 414. If the modified turn is within the motion constraints of the vessel, then the primary path is provided as the path for the vessel to navigate 416.

It will be appreciated that in calculating time t above, the distance between the current point and the previous point may be calculated which may be provided by the speed vs distance. The speed over ground may be calculated given the constant speed through the water of the vessel including the drift, set and the vector from the previous point to the current point. Thus, the speed of the vessel may include the effect of the drift on the speed of the vessel.

In order to determine whether the turn of the modified path is within the motion constraints of the vessel 412, the path planner may determine whether the lines connected to each vertex in the turn, which may be provided by points 321', describe an angle greater than the allowed rate of turn. If any vertices have an angle which is too great, the modified path may be considered to break the turn constraints of the vessel, leading to the revision of the primary path at step 414.

The primary path 314 may be revised in any way which would provide an alternative path which does not breach the motion constraints. In one example, revision of the primary path may be achieved by increasing the radius of the turn. The increase in the turn radius may be a predetermined fixed amount or an amount determined by the drift conditions and/or the difference between the primary path and modified path and/or the difference between the required turn rate for the modified path and maximum turn rate, for example.

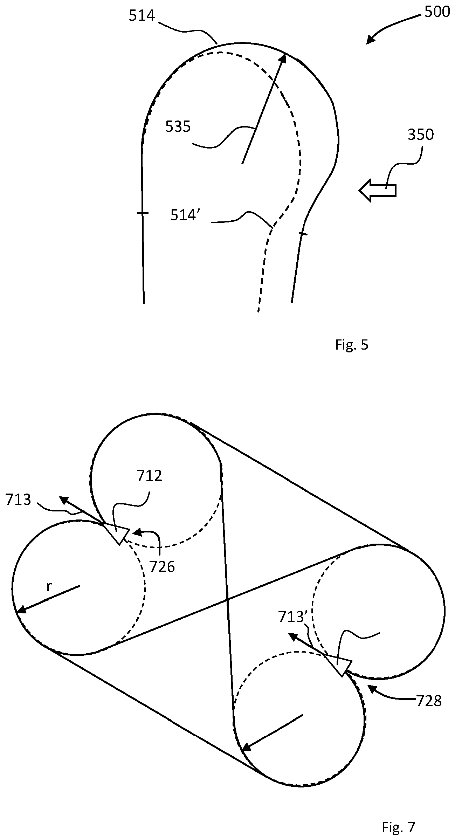

Figure 5 shows a revised primary path 500 in which the turn radius 535 has been increased. In increasing the turn radius, the diameter of the turn may be greater than the separation of the start and end waypoints for the turn which has resulted in the need for a Boutakoff turn, in this example. In such a scenario, the turn radius maybe taken to be the principal radius of the turn, rather than the offset turn which provides the increased width. However, it will be appreciated that these radii may be the same of course. It will also be appreciated that other shapes of turn may be possible, such as a parallel turn having one or more straight portions between adjacent turns, or an arcuate turn.

Once the revised primary path 514 with the larger turn radius has been established, the revised primary path 514 can be modified to account for the drift conditions 350 using, for example, the process used for the primary path such as that shown in Figure 4. An example of a modified path is provided at 514'. If the modified path 514' still breaches the motion constraints of the vessel 312, then the revised primary path 514 may be further revised, for example, by increasing the turn radius yet further. This process may be repeated until a satisfactory primary path is established.

The path planner may also provide a tolerance to the turn radius and/or motion constraints to allow for any changes to the drift conditions which may occur during the turn or due to inaccuracies in the measuring or estimating of the drift conditions 350. In one example, the accuracy of the path planner may be increased by sensing the sea state and drift conditions in real time, e.g. at the start of or shortly prior to the start of the turn and lead-in waypoint 334, and possibly during the execution of the manoeuvre.

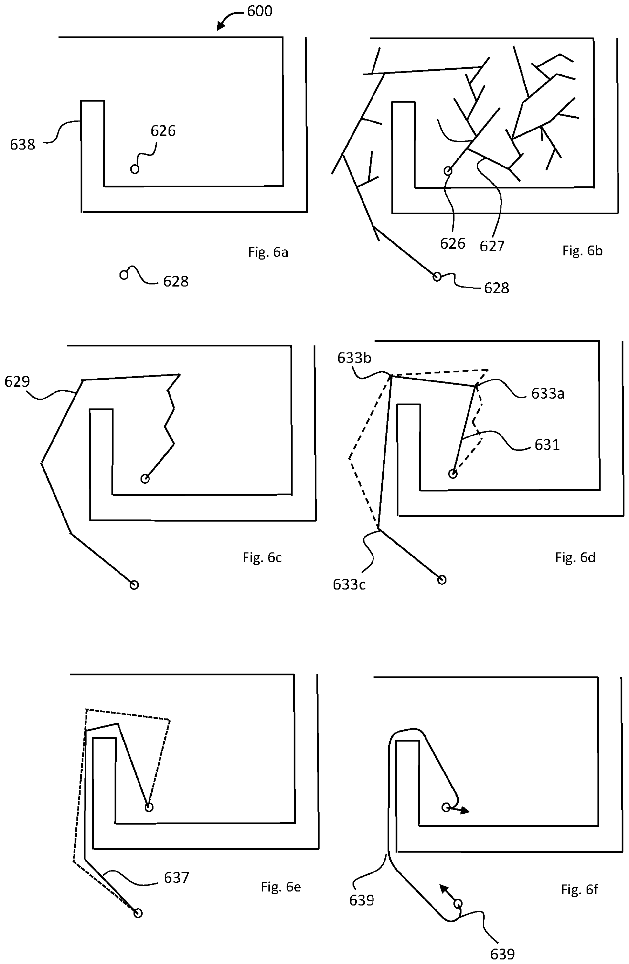

Returning to Figure 1, the initial primary path 14, which is provided to or determined by the path planner may be determined using one or more suitable algorithms. Figures 6a to 6e show representations of the various stages of an RRT algorithm which may be used as a part of determining the primary path. Figure 6f shows an additional stage of the algorithm in which the path is modified to include transitions between the segments of the path and at the start and end points to account for the start and end pose.

Thus, as can be seen in Figure 6a, there is scenario 600 having a start position 626 and an end position 628 which are separated by an obstacle 638 in the form of a harbour wall. It will be appreciated that the obstacle(s) may be any obstacle which the vessel is required to navigate around in travelling between a start point 626 and an end point 628. The obstacle 638 will typically be a static obstacle but this is not necessarily the case and dynamic or moving obstacles may be taken into account, where possible. Alternatively, moving obstacles may be accounted for using COLREGs procedures either with human intervention or an appropriate automated system.

The start point 626 and end point 628 may be provided using any suitable frame of reference such as Cartesian coordinates. The obstacles may be provided with a similar frame of reference and may be provided to the system as polygonal blocks or the like. The path planner may provide a sequence of Cartesian coordinates from the start position 626 to the end position 628 that describe a series of straight line paths that do not pass through any of the obstacles.

The RRT algorithm may have the following stages: determine an initial RRT graph; search the graph to find the shortest path using the RRT graph; and, optimise the shortest path.

Figure 6b shows a graph of positions created with the root node comprising the start position 626 and a child node at comprising the end position 628. The graph comprises a plurality of branches 627 which extended from a trunk attached to the root node. The branches extending from the trunk and other branches may be provided using well known RRT methods.

Figure 6c shows a best path 629 including the branches and portions of branches that provide the shortest path between the start position 626 and end position 628. Figure 6d shows a further step in which the best branch path is further improved by selecting paths 631 between branch nodes 633a-c which shorten the distance without crossing an obstacle. This may be achieved by selecting nodes which are within a direct line of sight of each other. Figure 6e represents an optimisation 637 of the best path in which each of the sections of the path are shortened as much as possible whilst respecting the obstacles to further reduce the overall path length.

Once the shortest path has been established, the vertices and tracks extending to the end points may be adapted to include transitions 639 using appropriate algorithms as known in the art. These algorithms may include a Dubin's curve and/or a clothiod. A Dubin's curve (or similar) may also be included to transition from the start or end points into the path which is selected from the RRT algorithm, as per Figure 6f, which is explained further with reference to Figure 7.

Figure 7 shows a start position 726 and an end position 728 for a vessel 712 having pose provided by arrow 713 and 713'. The shortest path from the start position and pose to an end position and pose for a non-holonomic vessel is given by either an initial left or right turn at the minimum radius r followed by an optional straight line and then followed by a final either left or right turn. The two turns together with the straight path may be referred to as a primary path in some examples.

As shown in Figure 7, there may be multiple possible paths from a start position 726 and pose to an end position 728 and pose are possible. However, for a given start position 726 and pose the initial turn is either an anti-clockwise or a clockwise turn from the current position and pose and around a turn of radius r.

The turning radius r, may be provided by the minimum turning radius of the vessel 712 as determined by the motion constraints on the vessel 712, which are discussed in more detail below. Hence, the motion constraints of the vessel 712 may define the turn radius of the primary path, and also the minimum turn radius which is used in assessing whether the modified path radius is breached.

In the case of a Boutakoff turn, two Dubin's curves may be provided in succession. The first Dubin's curve may provide the offset turn which widens track relative to the lead-in position, followed by a second Dubin's curve which completes the turn and transitions into the next section.

The path planner may be implemented by a suitable system. The system may be a vessel management system which comprises a path planner and other modules associated with the capturing and processing of data relevant to the path planning, and/or executing the path. The system may be distributed between different entities. The different entities may comprise one or more of the vessel and one or more remote operation centres. The remote operation centres may include one or more ground stations or may be provided by a water based station such as a master vessel located in the vicinity of the vessel. The master vessel may be the launch vessel from which the unmanned autonomous vessel was launched, for example.

The remote operation centre(s) may be configured to work in conjunction with the vessel and any vessel management systems such that a remoter operator can control certain aspects of the system and/or receive data therefrom and/or send data thereto. Hence, the vessel management system may comprise a plurality of human control interfaces, HCl. For example, a remote operator may be required to interface with and take control of the vessel under certain circumstances. In this instance, there may be an override facility which temporarily disables the autonomous control. The remote operator may receive data from the sensors and other on-board equipment, such as cameras, radar, sonar or LIDAR systems.

The remote operation centre or another entity may fulfil certain aspects of the method. For example, the remote operation centre may provide a mission plan or task to the vessel system, or may provide a primary path. Additionally or alternatively, the remote operation centre or another entity may provide the vessel with data relating to the drift conditions. In some examples, the remote operation centre may provide some data such as prevailing weather conditions or sea-state information from remote monitoring stations which the vessel system may use to determine the drift conditions. In other examples, the vessel may be include sensing equipment to determine the drift conditions.

The system may include various software and hardware modules which are configured to receive and/or determine information related to the path planning and execution.

The vessel management system may comprise known subsystems and/or modules and/or algorithms which interface with path planner. In one example, the vessel management system may comprise an open source behaviour based robotics toolkit known as MOOS-lvP. The path planner may be a component of the vessel management system.

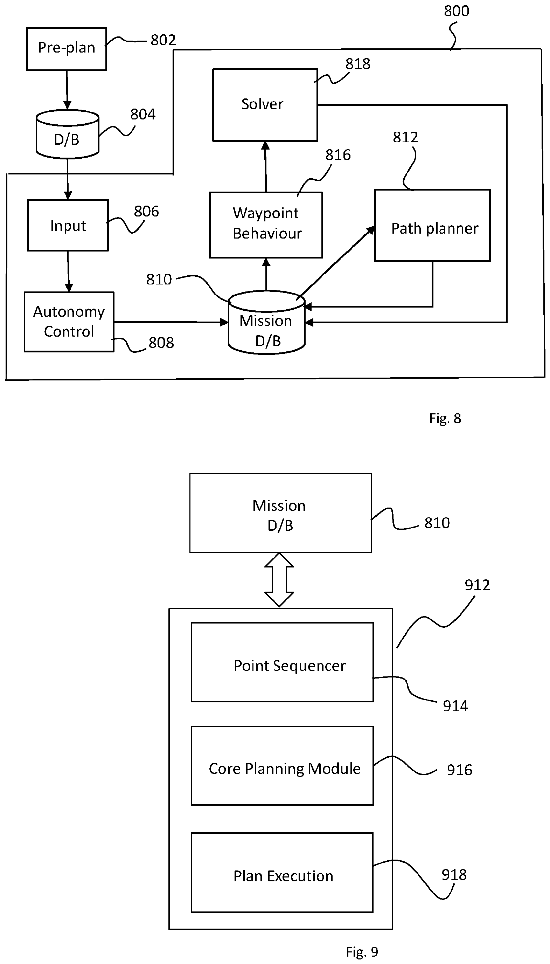

Figure 8 shows a schematic representation of a vessel management system 800 which may be utilised to provide one or more of the exemplary path planning methods and execution as described herein. As noted above, the system 800 may be distributed system in which different modules are provided in different entities. Thus, the representation shown in Figure 8 can be considered to be a functional representation showing the arrangement of the modules and/or functions, rather than a physical representation of the system.

As shown, the vessel management system 800, VSM, may receive a pre-planned mission plan or task using a planning tool 802 that is external to the VSM. The mission plan/task may be stored in a distributed database 804 by the planning tool 802. The planning tool 802 and database 804 may be located remotely in the remote operator centre, or elsewhere, or on the vessel. The plan may downloaded into the VSM via an input module 806. An autonomy control module 808 from the database may receive the pre-planned mission or task and use this to create a series of waypoints which satisfy the mission/task. Hence, the waypoints may include a plurality of start and end waypoints associated with the start of the tracks or path segments, similar to those described in connection with Figure 1 above and elsewhere. The waypoints may include a position with an associated pose for the vessel. The waypoints may be transit waypoints or waypoints associated with the start or end of tracks.

The mission plan/task may already take into account any static obstacles that are known about at planning time. Other obstacles may be detected by the vessel during the mission and taken into account by the path planner as the mission progresses. The path planner may not take account the effect of wind on the vessel as the effects are generally not relevant. The path planner may assume that obstacles are static and may not take into account any obstacle motion. Avoidance of moving objects may be handled by a COLREGs collision avoidance module or algorithm.

The autonomy control module 808 may write the series of waypoints and poses to be achieved by the vessel to a mission database 810. The waypoints and poses may be provided to the database in series, one at a time. The mission database may be located on-board the vessel.

The path planner 812 may read the waypoints and associated poses from the mission database 810 and carry out the method steps described herein to determine the path or paths required of the vessel to achieve the mission/task. The output from the path planner 812 may be a series of intermediate waypoints that must be achieved to manoeuvre the vessel from the start position and pose to the required position and pose. The path planner 812 may write each intermediate waypoint back into mission database. In one example, each waypoint is written into the mission database 810 once the preceding waypoint has been achieved. This may be advantageous for a situation where the waypoint is missed due to unforeseen circumstances such as a human intervention in the control.

A waypoint behaviour module 816 reads each intermediate waypoint from mission database 810 and may recommend a heading and speed to a solver module 818. The solver module 818 may take the recommended heading and speed from the waypoint behaviour module 816 into account along with recommendations from other concurrently running behaviours and write the final desired heading and speed to the mission database 810.

The heading and speed may be provided to the vessel platform which is responsible for controlling the vessel to navigate the heading and speed in order to achieve the intermediate waypoint.

Upon completion of the intermediate waypoints in the current plan the autonomy control module 808 may write the next waypoint into mission database 810 and the sequence is repeated until the mission/task is complete.

In some examples, such as that shown in Figure 8, the path planner 812 interfaces with the vessel via the mission database 810. Thus, the input and output variables and data are all received and held by the mission database 810 and called by the path planner 812 when required.

The data in the mission database 810 may be received from on-board or remote systems. The mission database data may comprise one or more of: the required waypoint position and pose to achieve; the current vessel position, heading, course, speed over ground and speed through the water; static obstacles, perhaps modelled as closed polygons, in the vicinity of the vessel that must be avoided; the sensed drift conditions; and the status of any tow which may comprise an indication of whether the tow is deployed and, if so, the paid out length of the tow cable.

As noted above, the path planner 812 may plan a path from a start position and pose to an end position and pose where the resultant path respects a minimum turn radius through the water, and potentially a maximum rate of turn through the water, defined by the vessel constraints such as the deployed tow and associated motion constraints. The resultant path may result in smooth series of turns that avoids static obstacles and stays inside a defined operational boundary. The path planning function may allow, for example, the vessel to turn at the end of one track and onto the next performing a Boutakoff, parallel or circular turn as the geometry of the turn requires.

The path planner 812 may comprise two phases. The first phase may comprise determining a primary path. The primary path may be determined from the start position to the end position using an RRT algorithm to avoid obstacles. The second phase may comprise providing transitions between the tracks of the initial primary path from phase one such that the motion constraints of the vessel are respected, and the required poses each of the waypoints are achieved. The second phase may comprise fitting a series of Dubin's curves to the optimal path that respects the navigational constraints and selecting the optimal curve.

The path planner 812 may be operated in real-time such that the waypoints are provided as the vessel travels along the path between waypoints. In this way, the next waypoint can be provided, and in some instances determined, once a previous waypoint has been achieved. Thus, the path planner may receive real-time sensed data including one or more of vessel position, heading, course, speed through the water, cable length, and ocean drift and swell. The data may also include static and possibly moving obstacles and/or an operational boundary (in relation to the obstacles or a task area).

In the examples where no payload, e.g. tow, is deployed the path planner may plan a turn that has a configurable minimum turn radius. When a payload has been deployed, the path planner may plan a path that respects the payload navigational/motion constrains. These may include: a minimum through the water turn radius. The turn radius over ground may be a function of the turn speed through the water and the tow cable paid out length. The minimum radius through the water may also be affected by the drift and set.

During a survey of an area and at the end of a track the path planner 812 may plan a turn to navigate the vessel onto the next straight track. During a survey, depending on the track spacing, navigational constraints and environmental conditions the end of track turn shall be a circular turn, a parallel turn or a Boutakoff turn. When not performing a survey and/or end of a track turn, the vessel may be required to achieve a new position and pose which the path planner may provide.

The execution of the plan may include further control aspects from the vessel to ensure that the task is being carried out successfully. In one example, the path planner 812 may monitor the execution of the plan and provide successive waypoints into the autonomous system when each waypoint is achieved. The system, possibly the path planner 812, may monitor the gyration of the vessel around a planned turn and declare a waypoint achieved if it achieves a specific angle around the turn. The path planner 812 may monitor the execution of the plan and shall re-plan if the vessel is not following the plan, e.g. after direct operator control.

Figure 9 shows a schematic representation of a path planner 912. The path planner may include a point sequencer module 914, a core planning module 916 and a plan execution module 918.

The point sequencer 914 may interface with the mission database 810 and take a series of required positions and poses to be achieved together with data about the environment, e.g. drift, set, vessel position and heading. The point sequencer 914 may make successive calls to the core planning module 916 to request it to determine a plan for each required position and pose.

The core planning module 916 may take a start position and pose and an end position and pose from the point sequencer module 914 together with the environmental data and determine a plan to achieve the end position and pose from the start position and pose given the planning constraints. The core planning module 916 may include steps identified in Figure 2, and other optional features described herein. Thus, core planning module 916 determines and outputs the navigational plan which has been adjusted to account for drift conditions, where necessary. Once the path has been determined by the core planning module 916, the plan may be passed to the plan execution module 918.

The plan execution module 918 may receive an entire plan from the core planning module 916 consisting of a series of waypoints to be achieved to provide a queue from which the waypoints can be drip-fed into the VSM, e.g. the mission database, as the next waypoint to be achieved.

The plan execution module 918 may also monitor the vessel position to determine when a waypoint has been achieved so that it can timely feed the next waypoint into the VSM. It should be noted that the core planning module 916 may not have knowledge of the mission database and all interfacing with the mission database 810 may be performed by the point sequencer module 914 and the plan execution module 918. In one example, the point sequencer may interface with the mission database 810 to receive waypoints to be achieved. These waypoints may comprise waypoints and poses to be achieved by the vessel. The point sequencer module may maintain a queue of the waypoints. The path planner 912 may plan a path for the next waypoint in the queue when the vessel reaches the position of the previous waypoint. As well as receiving waypoints from the mission database, the point sequencer module 914 may receive other context and environment data that is required by the core planning module 916.

Prior to requesting the core planning module 916 to create a plan, the point sequencer module 914 may be configured to write a temporary waypoint goal directly into mission database 808 using such that the temporary waypoint is directly in front of the vessel as calculated using the current vessel position and heading. The temporary waypoint may be useful to ensure that the underlying waypoint behaviours have a waypoint to be heading towards whilst the path planner is planning. The temporary waypoint may be replaced with the path determined by the core planning module 916 after planning is complete.

The point sequencer module 914 may configure the core planning module 916 and request it to plan a path from the current vessel position to each point in the waypoint buffer in turn. A new waypoint may not feed into the core planning module 916 until the previous waypoint has been achieved.

The core planning module 916 may receive the inputs including one or more of: vessel start position, vessel end position, start heading, end heading, a drift vector, a required turn, speed through the water, and obstacles. The turn radius may be determined by the motion constraints of the vessel and be determinant on whether a tow has been deployed and the cable length. The drift vector may include a drift direction and magnitude in a vector or Cartesian forms. The headings may include an angle in relation to North (or some other appropriate bearing). The positons may comprise Cartesian coordinates.

The outputs from the core planning module 916 may include a list of turns in which each turn may comprise a sequence of point elements, similar to those identified in Figure 3 and a centre of the turn. The points may be provided as Cartesian coordinates.

The core planning algorithm may first attempt to plan a path directly from the start position to the end position by fitting an optimal Dubin's curve from the start position and pose to the end position and pose. If such a curve exists that does not pass through obstacles then this may be used as the final path. If no such path is possible due to obstacles, then the core planning algorithm may compute a rapidly exploring random tree from the start position to the end position, as described above. It may then search for the shortest route through the tree. Based on the shortest route it may then fit an optimal Dubin's curve over that route that defines a series of intermediate waypoints that must be achieved to travel from the start position to the end position.

Each of the modules described above include one or more circuitry; and/or processor circuitry; and/or at least one application specific integrated circuit (ASIC); and/or at least one field programmable gate array (FPGA); and/or single or multi-processor architectures; and/or sequential/parallel architectures; and/or at least one programmable logic controllers (PLCs); and/or at least one microprocessor; and/or at least one microcontroller; and/or a central processing unit (CPU); and/or a graphics processing unit (GPU), to perform the methods. In various examples, the modules may comprise at least one processor and at least one memory. The memory may stores a computer program comprising computer readable instructions that, when read by the processor, causes performance of the methods described herein. The computer program may be software or firmware, or may be a combination of software and firmware.

The modules and associated processors may be located on the vessel, or may be located remote from the vessel, or may be distributed between the vessel and a location remote from the vessel, such as a remote operation centre. The processor may include at least one microprocessor and may comprise a single core processor, may comprise multiple processor cores (such as a dual core processor or a quad core processor), or may comprise a plurality of processors (at least one of which may comprise multiple processor cores).

The memory may be located on the vessel, or may be located remote from the vessel, or may be distributed between the vessel and a location remote from the vessel such as the remote operation centre. The memory may be any suitable non-transitory computer readable storage medium, data storage device or devices, and may comprise a hard disk and/or solid state memory (such as flash memory). The memory may be permanent non-removable memory, or may be removable memory (such as a universal serial bus (USB) flash drive or a secure digital card). The memory may include: local memory employed during actual execution of the computer program; bulk storage; and cache memories which provide temporary storage of at least some computer readable or computer usable program code to reduce the number of times code may be retrieved from bulk storage during execution of the code.

The computer program may be stored on a non-transitory computer readable storage medium. The computer program may be transferred from the non-transitory computer readable storage medium to the memory. The non-transitory computer readable storage medium may be, for example, a USB flash drive, a secure digital (SD) card, an optical disc (such as a compact disc (CD), a digital versatile disc (DVD) or a Blu-ray disc). In some examples, the computer program may be transferred to the memory via a wireless signal or via a wired signal.

Input/output devices may be coupled to the system and or individual modules either directly or through intervening input/output controllers. Various communication adaptors may also be coupled to the controller to enable the apparatus to become coupled to other apparatus or remote printers or storage devices through intervening private or public networks. Non-limiting examples include modems and network adaptors of such communication adaptors.

The user input device may comprise any suitable device for enabling an operator to at least partially control the vessel or interact with the VMS. For example, the user input device may comprise one or more of a keyboard, a keypad, a touchpad, a touchscreen display, a computer mouse and joystick. The controller is configured to receive signals from the user input device. The output device may be any suitable device for conveying information to a user. For example, the output device may be a display (such as a liquid crystal display, or a light emitting diode display, or an active matrix organic light emitting diode display, or a thin film transistor display, or a cathode ray tube display), and/or a loudspeaker, and/or a printer (such as an inkjet printer or a laser printer). The controller is arranged to provide a signal to the output device to cause the output device to convey information to the user.

## Claims

1. A path planning method for an autonomous marine vessel comprising a tow which comprises a sonar module, the method comprising:
obtaining an over-ground path (314) of travel for the vessel (312);
obtaining drift conditions (350) for the vessel travelling along the over-ground path;
determining a through-water path (314') which represents the vessel path through water when the vessel is travelling along the over-ground path under the influence of the drift conditions;
determining whether the through-water path is navigable within motion constraints of the vessel (312); and
providing the over-ground path (314) as the path for the vessel if the through-water path (314') is navigable within the motion constraints of the vessel;
wherein when the through-water path (314') breaches one or more of the motion constraints of the vessel, the method further comprises:
determining a revised over-ground path (514);
determining a revised through-water path (514') which represents the vessel path through the water when the vessel is travelling along the revised over-ground path under the influence of the drift conditions;
determining whether the revised through-water path (514') is navigable within the motion constraints of the vessel (312); and
providing the revised over-ground path (514) as the path for the vessel if the revised through-water path (514') is navigable within the motion constraints of the vessel,
wherein the motion constraints comprise a minimum turn radius and/or a maximum rate of turn through the water.

2. A path planning method according to claim 1, wherein the through-water path (314') comprises at least one turn having a first turn radius, and the revised through-water path comprises the at least one turn with a second turn radius (535), wherein the second turn radius is greater than the first turn radius, wherein the second turn radius is determined from the drift conditions (350), and wherein the motion constraint defines the first turn radius.

3. A path planning method according to any preceding claim, further comprising:
determining a plurality of points along the over-ground path (321);
extrapolating the position (321') of the plurality of points in accordance with the drift conditions (350); and
using the extrapolated positions (321') of the plurality of points to determine whether the motion constraints are breached and, optionally,
wherein the over-ground path (314) includes a start waypoint (334) and an end waypoint (336) and the extrapolated positions (321') provide the position that the points would migrate to under the influence of the drift conditions (350) in the time it would take for the vessel to arrive at the end waypoint (336) with a constant speed through the water or, optionally,
wherein extrapolating the position of the plurality of points includes determining a time it takes (t) for the vessel to travel between a first point and a second point and determining the drift of the second point under the drift conditions during the time (t), and optionally, wherein the time it takes for the vessel to travel between the first point and second point is determined using a constant through the water speed of the vessel and the drift conditions.

4. A path planning method according to any preceding claim, wherein determining whether the through-water path is navigable within the motion constraints of the vessel comprises determining whether the maximum rate of turn is breached.

5. A path planning method according to any preceding claim, further comprising determining a plurality of vertices along the through-water path, determining an angle of the vertices, wherein determining whether the through-water path is navigable comprises assessing whether the angle of the vertices is navigable by the vessel.

6. A path planning method according to any preceding claim, wherein a minimum turn diameter of the tow is determined from the paid out cable length of the tow and speed through the water.

7. A path planning method according to any preceding claim, wherein receiving the over-ground path comprises:
receiving a start position and pose and an end position and pose; and
determining a path segment which starts at the start position and pose and terminates at the end position and pose, and optionally, wherein determining the path segment comprises fitting a Dubin's curve from the start position and pose to the end position and pose.

8. A path planning method as claimed in claim 7, wherein determining the path segment comprises determining a rapidly exploring random tree from the start position (626) to the end position (628) and selecting a preferred path from the rapidly exploring random tree and, optionally, further comprising fitting a Dubin's curve over the preferred path.

9. A path planning method according to any preceding claim, wherein the path forms part of a route for the vessel, the route including a plurality of paths in which the paths are separated by waypoints, wherein each path is planned and executed in turn prior to next path being planned.

10. A path planning method according to any preceding claim, wherein obtaining the over-ground path of travel for the vessel comprises determining or receiving the over-ground path of travel.

11. A path planning method according to any preceding claim, wherein obtaining drift conditions for the vessel travelling along the over-ground path comprises determining the drift conditions.

12. A vessel management system comprising:
at least one processor;
at least one memory comprising computer readable instructions;
the at least one processor being configured to read the computer readable instructions to cause performance of the methods according to claims 1 to 11.

13. A computer program that, when read by a computer, causes performance of the method as claimed in any of claims 1 to 11.

14. A non-transitory computer readable storage medium comprising computer readable instructions that, when read by a computer, cause performance of the method as claimed in any of claims 1 to 11.

## Patentansprüche

1. Wegplanungsverfahren für ein autonomes Seeschiff, das einen Schleppzug umfasst, der ein Sonarmodul umfasst, wobei das Verfahren Folgendes umfasst:
Erlangen eines Weges über Grund (314) der Fahrt für das Schiff (312);
Erlangen von Abdriftbedingungen (350) für das Schiff, das entlang dem Weg über Grund fährt;
Bestimmen eines Weges durchs Wasser (314'), der den Weg des Schiffs durchs Wasser darstellt, wenn das Schiff entlang dem Weg über Grund unter dem Einfluss der Abdriftbedingungen fährt;
Bestimmen, ob der Weg durchs Wasser innerhalb der Bewegungsbeschränkungen des Schiffs (312) befahrbar ist; und
Bereitstellen des Weges über Grund (314) als den Weg für das Schiff, wenn der Weg durchs Wasser (314') innerhalb der Bewegungsbeschränkungen des Schiffs befahrbar ist;
wobei, wenn der Weg durchs Wasser (314') eine oder mehrere der Bewegungsbeschränkungen des Schiffs verletzt, das Verfahren ferner Folgendes umfasst:
Bestimmen eines überarbeiteten Weges über Grund (514);
Bestimmen eines überarbeiteten Weges durchs Wasser (514'), der den Weg des Schiffs durchs Wasser darstellt, wenn das Schiff entlang dem überarbeiteten Weg über Grund unter dem Einfluss der Abdriftbedingungen fährt;
Bestimmen, ob der überarbeitete Weg durchs Wasser (514') innerhalb der Bewegungsbeschränkungen des Schiffs (312) befahrbar ist; und
Bereitstellen des überarbeiteten Weges über Grund (514) als den Weg für das Schiff, wenn der überarbeitete Weg durchs Wasser (514') innerhalb der Bewegungsbeschränkungen des Schiffs befahrbar ist,
wobei die Bewegungsbeschränkungen einen minimalen Kurvenradius und/oder eine maximale Kurvengeschwindigkeit durchs Wasser umfassen.

2. Wegplanungsverfahren nach Anspruch 1, wobei der Weg durchs Wasser (314') mindestens eine Kurve mit einem ersten Kurvenradius umfasst und der überarbeitete Weg durchs Wasser die mindestens eine Kurve mit einem zweiten Kurvenradius (535) umfasst, wobei der zweite Kurvenradius größer als der erste Kurvenradius ist, wobei der zweite Kurvenradius aus den Abdriftbedingungen (350) bestimmt wird und wobei die Bewegungsbeschränkung den ersten Kurvenradius definiert.

3. Wegplanungsverfahren nach einem der vorhergehenden Ansprüche, ferner umfassend:
Bestimmen einer Vielzahl von Punkten entlang dem Weg über Grund (321);
Extrapolieren der Position (321') der Vielzahl von Punkten gemäß den Abdriftbedingungen (350); und
Verwenden der extrapolierten Positionen (321') der Vielzahl von Punkten, um zu bestimmen, ob die Bewegungsbeschränkungen nicht eingehalten werden, und optional,
wobei der Weg über Grund (314) einen Start-Wegpunkt (334) und einen End-Wegpunkt (336) einschließt und die extrapolierten Positionen (321') die Position bereitstellen, zu der die Punkte unter dem Einfluss der Abdriftbedingungen (350) in der Zeit wandern würden, die das Schiff benötigen würde, um mit einer konstanten Geschwindigkeit durchs Wasser am End-Wegpunkt (336) anzukommen, oder optional,
wobei das Extrapolieren der Position der Vielzahl von Punkten das Bestimmen einer Zeit (t), die das Schiff benötigt, um zwischen einem ersten Punkt und einem zweiten Punkt zu fahren, und das Bestimmen der Abdrift des zweiten Punktes unter den Abdriftbedingungen während der Zeit (t) einschließt, und optional, wobei die Zeit, die das Schiff benötigt, um zwischen dem ersten Punkt und dem zweiten Punkt zu fahren, unter Verwendung einer konstanten Geschwindigkeit des Schiffs durchs Wasser und der Abdriftbedingungen bestimmt wird.

4. Wegplanungsverfahren nach einem der vorhergehenden Ansprüche, wobei das Bestimmen, ob der Weg durchs Wasser innerhalb der Bewegungsbeschränkungen des Schiffs befahrbar ist, das Bestimmen, ob die maximale Kurvengeschwindigkeit nicht eingehalten wird, umfasst.

5. Wegplanungsverfahren nach einem der vorhergehenden Ansprüche, ferner das Bestimmen einer Vielzahl von Scheitelpunkten entlang dem Weg durchs Wasser und das Bestimmen eines Winkels der Scheitelpunkte umfassend, wobei das Bestimmen, ob der Weg durchs Wasser befahrbar ist, das Beurteilen, ob der Winkel der Scheitelpunkte durch das Schiff befahrbar ist, umfasst.

6. Wegplanungsverfahren nach einem der vorhergehenden Ansprüche, wobei ein minimaler Kurvendurchmesser des Schleppzugs aus der abgerollten Kabellänge des Schleppzugs und der Geschwindigkeit durchs Wasser bestimmt wird.

7. Wegplanungsverfahren nach einem der vorhergehenden Ansprüche, wobei das Empfangen des Weges über Grund Folgendes umfasst:
Empfangen einer Startposition und -lage und einer Endposition und -lage; und
Bestimmen eines Wegsegments, das an der Startposition und -lage beginnt und an der Endposition und -lage endet, und wobei optional das Bestimmen des Wegsegments das Anpassen einer Dubins-Kurve von der Startposition und -lage bis zur Endposition und -lage umfasst.

8. Wegplanungsverfahren nach Anspruch 7, wobei das Bestimmen des Wegsegments das Bestimmen eines schnell explorierenden Zufallsbaums von der Startposition (626) zur Endposition (628) und Auswählen eines bevorzugten Weges aus dem schnell explorierenden Zufallsbaum umfasst, und optional ferner das Anpassen einer Dubins-Kurve über den bevorzugten Weg umfasst.

9. Wegplanungsverfahren nach einem der vorhergehenden Ansprüche, wobei der Weg einen Teil einer Route für das Schiff bildet, wobei die Route eine Vielzahl von Wegen einschließt, bei denen die Wege durch Wegpunkte getrennt sind, wobei jeder Weg nacheinander geplant und ausgeführt wird, bevor der nächste Weg geplant wird.

10. Wegplanungsverfahren nach einem der vorhergehenden Ansprüche, wobei das Erlangen des Weges über Grund für das Schiff ein Bestimmen oder Empfangen des Weges über Grund umfasst.

11. Wegplanungsverfahren nach einem der vorhergehenden Ansprüche, wobei das Erlangen von Abdriftbedingungen für das auf dem Weg über Grund fahrende Schiff das Bestimmen der Abdriftbedingungen umfasst.

12. Schiffsverwaltungssystem, umfassend:
mindestens einen Prozessor;
mindestens einen Speicher, der computerlesbare Anweisungen umfasst,
wobei der mindestens eine Prozessor dafür konfiguriert ist, die computerlesbaren Anweisungen zu lesen, um das Durchführen der Verfahren nach den Ansprüchen 1 bis 11 zu veranlassen.

13. Computerprogramm, das, wenn es durch einen Computer gelesen wird, das Durchführen des Verfahrens nach einem der Ansprüche 1 bis 11 bewirkt.

14. Nichtflüchtiges computerlesbares Speichermedium, das computerlesbare Anweisungen umfasst, die, wenn sie durch einen Computer gelesen werden, das Durchführen des Verfahrens nach einem der Ansprüche 1 bis 11 bewirken.

## Revendications

1. Procédé de planification de trajectoire pour un navire marin autonome comprenant une remorque comprenant un module sonar, le procédé comprenant les étapes consistant à :
obtenir une trajectoire de déplacement par-dessus le fond (314) pour le navire (312) ;
obtenir des conditions de dérive (350) pour le navire se déplaçant le long de la trajectoire par-dessus le fond ;
déterminer une trajectoire sur l'eau (314') qui représente la trajectoire du navire à la surface de l'eau tandis que le navire suit la trajectoire par-dessus le fond sous l'influence des conditions de dérive ;
déterminer si la trajectoire sur l'eau est navigable en respectant les contraintes de mouvement du navire (312) ; et
fournir la trajectoire par-dessus le fond (314) comme trajectoire du navire si la trajectoire sur l'eau (314') est navigable en respectant les contraintes de mouvement du navire ;
dans lequel, lorsque la trajectoire sur l'eau (314') n'est pas conforme à une ou plusieurs contraintes de mouvement du navire, le procédé comprend en outre les étapes consistant à :
déterminer une trajectoire par-dessus le fond révisée (514) ;
déterminer une trajectoire sur l'eau révisée (514') qui représente la trajectoire du navire sur l'eau tandis que le navire suit la trajectoire par-dessus le fond révisée sous l'influence des conditions de dérive ;
déterminer si la trajectoire sur l'eau révisée (514') est navigable en respectant les contraintes de mouvement du navire (312) ; et
fournir la trajectoire par-dessus le fond révisée (514) comme trajectoire pour le navire si la trajectoire sur l'eau révisée (514') est navigable en respectant les contraintes de mouvement du navire,
lesdites contraintes de mouvement comprenant un rayon de virage minimum et/ou une vitesse de virage maximum sur l'eau.

2. Procédé de planification de trajectoire selon la revendication 1, dans lequel la trajectoire sur l'eau (314') comprend au moins un virage ayant un premier rayon de virage, et la trajectoire sur l'eau révisée comprend l'au moins un virage avec un deuxième rayon de virage (535), ledit deuxième rayon de virage étant supérieur audit premier rayon de virage, ledit deuxième rayon de virage étant déterminé à partir des conditions de dérive (350), et ladite contrainte de mouvement définissant le premier rayon de virage.

3. Procédé de planification de trajectoire selon l'une quelconque des revendications précédentes, comprenant en outre les étapes consistant à :
déterminer une pluralité de points le long de la trajectoire par-dessus le fond (321) ;
extrapoler la position (321') de la pluralité de points conformément aux conditions de dérive (350) ; et
utiliser les positions extrapolées (321') de la pluralité de points pour déterminer si les contraintes de mouvement ne sont pas respectées et, facultativement,
dans lequel la trajectoire par-dessus le fond (314) inclut un point de cheminement de départ (334) et un point de cheminement final (336) et les positions extrapolées (321') fournissent la position vers laquelle les points migreraient sous l'influence des conditions de dérive (350) pendant le temps qui serait nécessaire au navire pour arriver au point de cheminement final (336) à vitesse constante sur l'eau ou, facultativement,
dans lequel l'extrapolation de la position de la pluralité de points comprend la détermination d'un temps (t) nécessaire au navire pour se déplacer entre un premier point et un deuxième point et la détermination de la dérive du deuxième point dans les conditions de dérive pendant le temps (t), et facultativement, le temps nécessaire au navire pour se déplacer entre le premier point et le deuxième point est déterminé à l'aide d'une vitesse sur l'eau constante du navire et des conditions de dérive.

4. Procédé de planification de trajectoire selon l'une quelconque des revendications précédentes, dans lequel l'étape consistant à déterminer si la trajectoire sur l'eau est navigable en respectant les contraintes de mouvement du navire comprend l'étape consistant à déterminer si la vitesse de virage maximum n'est pas respectée.

5. Procédé de planification de trajectoire selon l'une quelconque des revendications précédentes, comprenant en outre la détermination d'une pluralité de sommets le long de la trajectoire sur l'eau et la détermination d'un angle des sommets, ladite détermination du fait que la trajectoire sur l'eau est navigable comprenant l'évaluation de la navigabilité de l'angle des sommets par le navire.

6. Procédé de planification de trajectoire selon l'une quelconque des revendications précédentes, dans lequel un diamètre de virage minimum de la remorque est déterminé à partir de la longueur de câble déployée de la remorque et de la vitesse sur l'eau.

7. Procédé de planification de trajectoire selon l'une quelconque des revendications précédentes, dans lequel la réception de la trajectoire par-dessus le fond comprend :
la réception d'une position et d'une pose de départ et d'une position et d'une pose finales ; et
la détermination d'un segment de trajectoire qui commence à la position et à la pose de départ et se termine à la position et à la pose finales, et facultativement, la détermination du segment de trajectoire comprend l'ajustement d'une courbe de Dubins depuis la position et la pose de départ jusqu'à la position et la pose finales.

8. Procédé de planification de trajectoire selon la revendication 7, dans lequel la détermination du segment de trajectoire comprend la détermination d'un arbre aléatoire à exploration rapide depuis la position de départ (626) jusqu'à la position finale (628) et la sélection d'une trajectoire préférentielle à partir de l'arbre aléatoire à exploration rapide et, facultativement, comprenant en outre l'ajustement d'une courbe de Dubins sur la trajectoire préférentielle.

9. Procédé de planification de trajectoire selon l'une quelconque des revendications précédentes, dans lequel la trajectoire fait partie d'un itinéraire pour le navire, l'itinéraire incluant une pluralité de trajets dans laquelle les trajets sont séparés par des points de cheminement, chaque trajectoire étant planifiée et exécutée tour à tour avant la planification de la trajectoire suivante.

10. Procédé de planification de trajectoire selon l'une quelconque des revendications précédentes, dans lequel l'obtention de la trajectoire de déplacement par-dessus le fond pour le navire comprend une détermination ou une réception de la trajectoire de déplacement par-dessus le fond.

11. Procédé de planification de trajectoire selon l'une quelconque des revendications précédentes, dans lequel l'obtention de conditions de dérive pour le navire suivant la trajectoire par-dessus le fond comprend une détermination des conditions de dérive.

12. Système de gestion de navire comprenant :
au moins un processeur ;
au moins une mémoire comprenant des instructions lisibles par ordinateur ;
l'au moins un processeur étant configuré pour lire les instructions lisibles par ordinateur pour amener la réalisation des procédés selon les revendications 1 à 11.

13. Programme informatique qui, lorsqu'il est lu par un ordinateur, amène la réalisation du procédé selon l'une quelconque des revendications 1 à 11.

14. Support de stockage non transitoire lisible par ordinateur comprenant des instructions lisibles par ordinateur qui, lorsqu'elles sont lues par un ordinateur, amènent la réalisation du procédé selon l'une quelconque des revendications 1 à 11.
